# EUROPÄISCHE PATENTSCHRIFT

(11) **EP 0 628 504 B1**
(45) Veröffentlichungstag und Bekanntmachung des Hinweises auf die Patenterteilung: **09.10.1996**
(21) Anmeldenummer: 94107683.8
(22) Anmeldetag: 18.05.1994
(51) Int. Cl.: B65G 69/28

(54) **Überladebrücke für Rampen**
Loading bridge for ramps
Pont de chargement pour rampes

(30) Priorität: 11.06.1993 DE 4319310
(43) Veröffentlichungstag der Anmeldung: 14.12.1994
(73) Patentinhaber: Alten, Kurt, D-30974 Wennigsen (DE)
(72) Erfinder: Alten, Kurt, D-30974 Wennigsen (DE); Borchardt, Horst, D-30974 Wennigsen (DE)
(74) Vertreter: Depmeyer, Lothar

(56) Entgegenhaltungen:
- DE-C- 1 010 458
- DE-U- 8 806 449
- DE-U- 9 202 564
- GB-A- 1 212 112
- US-A- 2 714 735
- US-A- 3 454 974

## Beschreibung

Die Erfindung betrifft eine Überladebrücke für Rampen mit einer rampenseitig um eine waagerechte Achse verschwenkbaren Brückenplatte und einer am freien Ende der Brückenplatte ein- und ausfahrbar bzw. ein- und ausklappbar angeordneten Verlängerung zur Abstützung auf der zu be- bzw. entladenden Plattform, wobei die Brückenplatte an ihrem rampenseitigen Ende zur Bildung einer Gelenkstelle mit einer oder mehreren Laschen versehen ist, deren Auge einen die waagerechte Achse bildenden, an der Rampe gelagerten Bolzen umschliesst (siehe zum Beispiel die DE-U-8806449).

Bei den bekannten Überladebrücken dieser Ausführung sind die Laschen mit der Brückenplatte fest verbunden; dabei sind Justierungen der in die Rampe eingesetzten Brückenplatte nicht mehr möglich.

Oft besteht der Wunsch, zunächst den die Brückenplatte umschliessenden Stahlrahmen z.B. durch Einbetonieren zu befestigen, der im Regelfalle nicht nur zur Lagerung der die Schwenkachse der Brückenplatte bildenden Achse, sondern auch der Armierung der oberen Kante der Rampenausnehmung zur Aufnahme der Brückenplatte dient. Wird indessen zunächst der Stahlrahmen montiert, so kann nicht immer sichergestellt werden, dass die Brückenplatte nach dem Einsetzen in den Stahlrahmen ihre vorgeschriebene Stellung einnimmt.

Der Erfindung liegt die Aufgabe zugrunde, die eingangs erwähnten Überladebrücken so auszubilden, dass eine nachträgliche Lagekorrektur der Brückenplatte mit einfachen Mitteln ermöglicht wird.

Zur Lösung dieser Aufgabe ist erfindungsgemäss die Brückenplatte an den Laschen in der durch sie bestimmten Ebene nach allen Seiten hin verschiebbar und nach einer Verschiebung an der Lasche fest verankerbar. Demgemäss wird aufgrund der Erfindung eine feste Verbindung zwischen der Lasche und der Brückenplatte erst dann hergestellt, wenn die Brückenplatte montiert und in die gewünschte Lage gebracht ist. Da die Laschen bereits befestigt sind, bedarf es nur noch einer Verankerung der Brückenplatte an den Laschen.
Diese Verankerung wird vorzugsweise durch Verschrauben hergestellt, wobei mit Vorteil die Verschraubung so ausgeführt wird, dass z.B. die Schraubbolzen von oben her, also von der Brückenoberseite her betätigt werden können. Dazu werden in dem Deckblech der Brückenplatte kleine Durchbrüche vorgesehen, deren Abmessungen denjenigen der Schraubbolzenköpfe entsprechen. Darüber hinaus wird diese Verschraubung einerseits mit einem zur Justierung erforderlichen Spiel, andererseits aber auch so ausgeführt, dass die Laschen ausreichend fest mit der Brückenplatte durch Klemmen verbunden werden können, wobei aber auch durch kleine Vorsprünge ein gewisser Formschluss herbeigeführt werden kann, die beim Anziehen der Schraubbolzen eine bleibende Verformung des angrenzenden Elementes bewirken.

Ein Ausführungsbeispiel der Erfindung ist in der Zeichnung dargestellt. Es zeigen :

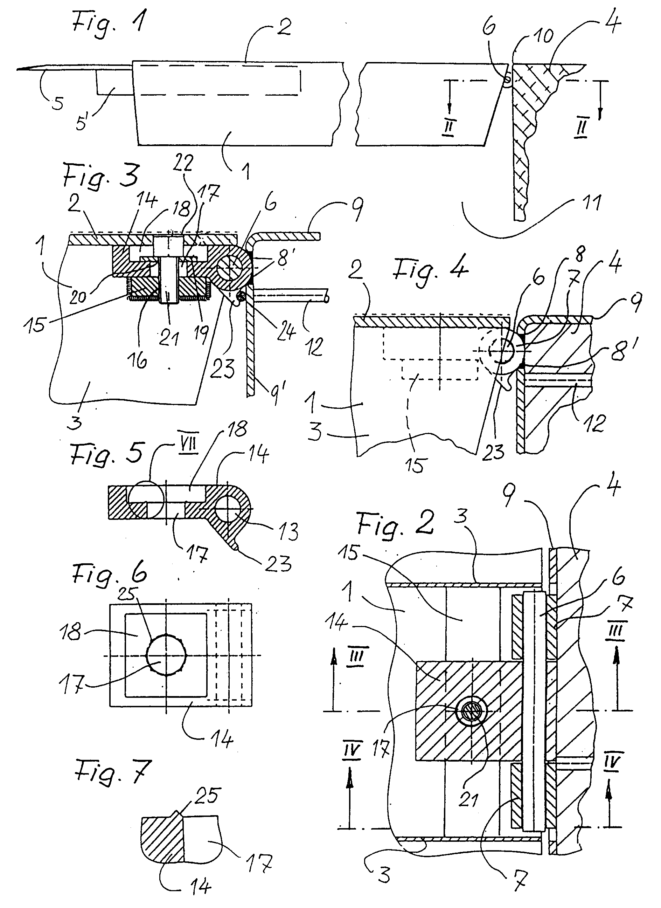

Fig. 1 eine Überladebrücke in der Seitenansicht,
Fig. 2 einen Schnitt nach der Linie II - II von Fig. 1,
Fig. 3 einen Schnitt nach der Linie III - III von Fig. 2,
Fig. 4 einen Schnitt nach der Linie IV - IV von Fig. 2,
Fig. 5 ein Einzelteil der Überladebrücke, nämlich eine Lasche im Längsschnitt,
Fig. 6 die Lasche gemäss Fig. 5 in der Draufsicht und
Fig. 7 eine Einzelheit aus Fig. 5 im Bereich des Kreises VII.

Die Brückenplatte 1 mit einem Deckblech 2 und längs verlaufenden Unterzügen 3 hat an ihrem freien, der Rampe 4 abgekehrten Ende eine ein- und ausfahrbare Verlängerung 5 auf einem Schlitten 5', die zur Abstützung der Brückenplatte 1 auf dem andockenden, zu be- bzw. entladenden Fahrzeug dient. Am hinteren, rampenseitigen Ende ist die Brückenplatte 1 um eine Querachse verschwenkbar angeordnet, die von zwei über die Brückenbreite verteilten, fluchtenden Bolzen 6 gebildet wird.

Die Enden der Bolzen 6 sind in Hülsen 7 gelagert, welche in kleine Fenster 8 der Brückeneinfassung 9 eingreifen und dort durch Schweissungen 8' fest gelagert sind. Die Brückeneinfassung 9, die den die Brückenplatte 1 umschliessenden Rand 10 der sich unterhalb der Brückenplatte 1 befindlichen Freiraum 11 der Rampe 4 verstärkt und begrenzt, hat Verankerungselemente 12, die der Einbetonierung der Brückeneinfassung 9 dienen.

Die Bolzen 6 werden mittig von einem Auge 13 von Laschen 14 umschlossen, die an der Unterseite des Deckbleches 2 anliegen und sich unten auf einer Traverse 15 abstützen, deren Enden mit zwei Unterzügen 3 verschweisst sind. Diese Traverse 15 hat ein Gewindeloch 16 unterhalb eines wesentlich grösseren Durchbruches 17 in der Lasche 14. Die Lasche 14 hat zudem an ihrer Oberseite eine Vertiefung 18, deren Grund zur Auflage einer Scheibe 19 dient, die mittig mit einer Bohrung 20 versehen ist, die von einem Schraubbolzen 21 durchsetzt ist. Dieser Schraubbolzen 21 greift unten in das Gewindeloch 16 ein; demgemäss wird durch Anziehen des Schraubbolzens 21 die Lasche 14 zwischen der Scheibe 19 und der Traverse 17 fest eingeklemmt. Damit der Schraubbolzen 21 von oben her betätigt werden kann, hat das Deckblech 2 eine Durchbrechung 22.

Die Lasche 14 hat unterhalb ihres Auges 13 einen sich nach unten erstreckenden Vorsprung 23, der im wesentlichen hakenförmig gestaltet ist und einen quer zur Brücke verlaufenden Stab 24 erfassen kann, dessen Rücken an dem senkrechten Schenkel 9' der Brückeneinfassung 9 anliegt.

Nach dem Einbetonieren der Brückeneinfassung 9 werden die Bolzen 6 zusammen mit den Laschen 14 installiert. Damit diese eine montagegerechte Stellung einnehmen können, werden die Stäbe 24 eingesetzt. Dabei nehmen die Laschen 14 eine waagerechte Stellung ein, wobei jedoch auch geringe Abweichungen hiervon möglich sind. Alsdann wird die Brückenplatte 1 auf die Laschen 14 aufgeschoben, die eine taschenartige Vertiefung vorfinden, die oben durch das Deckblech 2 und unten durch die Traverse 16 begrenzt ist. Nach dem Einsetzen der Schraubbolzen 20 werden diese angezogen. Damit wird die Brückenplatte 1 fest mit den Laschen 14 verbunden. Vorher oder nach dem Anziehen der Schraubbolzen 20 können die Stäbe 24 entfernt werden, um die Arretierung der Laschen 14 aufzuheben.

Von besonderer Bedeutung ist, dass der Durchbruch 17 wesentlich grösser ist als der Querschnitt des Schraubbolzens 21. Damit wird es möglich, die Brückenplatte 1 vor dem Anziehen der Schraubbolzen 21 zur Seite hin oder in Längsrichtung zu verschieben, damit eine Justierung der Brückenplatte 1 erreicht werden kann.

Es sei erwähnt, dass die zum Einsetzen des Schraubbolzens 21 erforderlichen Durchbrechungen auch noch durch Bohren vorgesehen werden können, wenn die Justierung der Brückenplatte 1 vollzogen ist. Ggfs. kann auch das Gewinde für den Schraubbolzen noch nachgeschnitten werden. Wichtig ist aber in jedem Falle, dass die Brückenplatte 1 nach eingeführter Lasche 14 Verstellbewegungen der Brückenplatte 1 gegenüber der Lasche 14 zulässt und dass nach der Justierung eine Fixierung durchgeführt werden kann.

Um eine ausreichend feste Verbindung zwischen den Laschen 14 und der Brückenplatte 1 herbeiführen zu können, hat die Lasche 14 an ihrer Oberseite am Rand der Durchbrechung 17 kleine Vorsprünge 25, die beim Anziehen der Schraubbolzen 21 in die Scheibe 19 eindringen und so einen Formschluss herbeiführen.

Die Durchbrechung 22 kann im übrigen der Grösse des Kopfes des Schraubbolzens 21 angepasst sein, um so unnötige Durchbrüche im Deckblech 2 zu vermeiden.

## Patentansprüche

1. Überladebrücke für Rampen mit einer rampenseitig um eine waagerechte Achse verschwenkbaren Brückenplatte und einer am freien Ende der Brückenplatte ein- und ausfahrbar bzw. ein- und ausklappbare angeordneten Verlängerung zur Abstützung auf der zu be- bzw. entladenden Plattform, wobei die Brückenplatte an ihrem rampenseitigen Ende zur Bildung einer Gelenkstelle mit einer oder mehreren Laschen versehen ist, deren Auge eine die waagerechte Achse bildenden, an der Rampe gelagerten Bolzen umschliessen, dadurch gekennzeichnet, dass die Brückenplatte (1) an den Laschen (14) in der durch die Brückenplatte (1) bestimmten Ebene nach allen Seiten verschiebbar und nach einer Verschiebung an der Lasche (14) fest verankerbar ist.

2. Brücke nach Anspruch 1, dadurch gekennzeichnet, dass die Lasche (14) mit ihrer Unterseite auf einer Traverse (15) der Brückenplatte (1) aufliegt und zwischen dieser und der Verbreiterung eines die Traverse (15) und die Lasche (14) durchsetzenden Schraubbolzens (21) einklemmbar ist.

3. Brücke nach Anspruch 2, dadurch gekennzeichnet, dass der Kopf des Schraubbolzens (21) über eine Scheibe (19) auf die Lasche (14) einwirkt.

4. Brücke nach Anspruch 1, dadurch gekennzeichnet, dass die Lasche (14) einen so gross bemessenen Durchbruch (17) für den Schraubbolzen (21) aufweist, dass die Brückenplatte (1) gegenüber der Lasche (14 ) verschiebbar ist.

5. Brücke nach Anspruch 1, dadurch gekennzeichnet, dass zumindest ein an der Verklemmung beteiligtes Element (14) mit kleinen Vorsprüngen (25) versehen ist, die sich beim Anziehen des Schraubbolzens (21) in das benachbarte Element eingraben und dies bleibend verformen.

6. Brücke nach Anspruch 1, dadurch gekennzeichnet, dass sich oberhalb des Kopfes des Schraubbolzens (21) in dem Deckblech (2) der Brückenplatte (1) eine Durchbrechung (22) befindet, über die die Verschraubung bedienbar ist.

7. Brücke nach Anspruch 6, dadurch gekennzeichnet, dass die Grösse der Durchbrechung (22) derjenigen des Schraubbolzens (21) bzw. seines Kopfes entspricht.

8. Brücke nach Anspruch 1, dadurch gekennzeichnet, dass der bzw. die Bolzen (6) von Hülsen (7) gehalten sind, die in Fenster (8) einer die Brückenplatte (1) umschliessenden Brückeneinfassung (9) eingreifen und dort verschweisst sind.

9. Brücke nach Anspruch 2, dadurch gekennzeichnet, dass die Laschen (14) mit geringem Spiel zwischen der Traverse (15) und dem Deckblech der Brückenplatte (1) angeordnet ist.

10. Brücke nach Anspruch 1, 2, 3 und 9, dadurch gekennzeichnet, dass die Laschen (14) an ihrer Oberseite eine Vertiefung (18) aufweisen, in der der Kopf des Schraubbolzens (21) bzw. die Scheibe (19) angeordnet ist.

11. Brücke nach Anspruch 1, dadurch gekennzeichnet, dass das Auge der Laschen (14) in ein Fenster (8) einer die Brückenplatte (1) umschliessenden Brückeneinfassung (9) hineinragt und dort verschweisst ist.

12. Brücke nach Anspruch 8, dadurch gekennzeichnet, dass jeder Lasche (14) ein Bolzen (6) zugeordnet ist, dessen Enden in den Hülsen (7) angeordnet sind.

## Claims

1. Transfer bridge for platforms, having a bridge plate which is pivotable at the platform end about a horizontal axis, and an extension member which is disposed so as to be retractable and extendable or respectively inwardly pivotable and outwardly pivotable on the free end of the bridge plate for support on the platform to be loaded or unloaded, the bridge plate being provided with one or more lugs on its end facing the platform to form a pivotal location, the eyelet of said lugs surrounding a pin, which forms the horizontal axis and is mounted on the platform, characterised in that the bridge plate (1) is displaceable in all directions on the lugs (14) in the plane determined by the bridge plate (1) and is fixedly securable on the lug (14) after displacement.

2. Bridge according to claim 1, characterised in that the lug (14) lies with its underside on a cross-piece member (15) of the bridge plate (1) and is clampable in position between said bridge plate and the widened portion of a screw bolt (21), which traverses the cross-piece member (15) and the lug (14).

3. Bridge according to claim 2, characterised in that the head of the screw bolt (21) acts on the lug (14) via a disc (19).

4. Bridge according to claim 1, characterised in that the lug (14) has such a large-dimensioned aperture (17) for the screw bolt (21) that the bridge plate (1) is displaceable relative to the lug (14).

5. Bridge according to claim 1, characterised in that at least one element (14), which participates in clamping, is provided with small projection members (25), which extend into the adjacent element when the screw bolt (21) is tightened and permanently deform said adjacent element.

6. Bridge according to claim 1, characterised in that an opening (22) is situated in the cover plate (2) of the bridge plate (1) above the head of the screw bolt (21), via which opening the screw-connection is operable.

7. Bridge according to claim 6, characterised in that the size of the opening (22) corresponds to that of the screw bolt (21) or its head.

8. Bridge according to claim 1, characterised in that the pin or the pins (6) are retained by sleeves (7), which engage in windows (8) of a bridge enclosure (9) surrounding the bridge plate (1) and are welded there.

9. Bridge according to claim 2, characterised in that the lugs (14) are disposed with minimal clearance between the cross-piece member (15) and the cover plate of the bridge plate (1).

10. Bridge according to claims 1, 2, 3 and 9, characterised in that the lugs (14) have at their upper side an indentation (18), in which the head of the screw bolt (21) or the disc (19) is disposed.

11. Bridge according to claim 1, characterised in that the eyelet of the lugs (14) protrudes into a window (8) of a bridge enclosure (9), which surrounds the bridge plate (1), and is welded there.

12. Bridge according to claim 8, characterised in that a pin (6) is associated with each lug (14), and the ends of said pin are disposed in the sleeves (7).

## Revendications

1. Niveleur de quai, comportant, côté quai, un tablier basculant par rapport à un axe horizontal et un prolongement monté à l'extrémité libre du tablier de manière à pouvoir le rentrer et le sortir ou le rabattre et le déployer, destiné à prendre appui sur la plate-forme à charger ou à décharger, le tablier étant muni à son extrémité côté quai, en vue de former un point d'articulation, d'une ou de plusieurs attaches dont l'oeillet entoure un axe formant l'axe horizontal, monté sur le quai, caractérisé en ce que le tablier (1) peut coulisser sur les attaches (14) de tous les côtés dans le plan déterminé par le tablier (1) et être ancré solidement à l'attache (14) après un coulissement.

2. Niveleur de quai suivant la revendication 1, caractérisé en ce que l'attache (14) s'applique par sa face inférieure a une traverse (15) du tablier (1) et peut être coincée entre celui-ci et la partie élargie d'un boulon (21) fileté traversant la traverse (15) et l'attache (14).

3. Niveleur de quai suivant la revendication 2, caractérisé en ce que la tête du boulon (21) fileté agit sur l'attache (14) par l'intermédiaire d'une rondelle (19).

4. Niveleur de quai suivant la revendication 1, caractérisé en ce que l'attache (14) comporte un passage, destiné au boulon (21) fileté, d'une dimension si grande que le tablier (1) peut coulisser par rapport à l'attache (14)

5. Niveleur de quai suivant la revendication 1, caractérisé en ce qu'au moins un élément (14) participant au coincement est muni de petites parties (25) en saillie qui, lorsque le boulon (21) fileté est vissé, s'enfoncent dans l'élément voisin et le déforment durablement.

6. Niveleur de quai suivant la revendication 1, caractérisé en ce que, audessus de la tête du boulon (21) fileté, est ménagé dans la tôle (2) de couverture du tablier (1) un passage (22) par lequel le vissage peut être effectué.

7. Niveleur de quai suivant la revendication 6, caractérisé en ce que la dimension du passage (22) correspond à celle du boulon (21) fileté et de sa tête.

8. Niveleur de quai suivant la revendication 1, caractérisé en ce que les axes (6) sont maintenus par des douilles (7) qui rentrent dans des fenêtres (8) d'un encadrement (9) du niveleur de quai entourant le tablier (1) et qui y sont soudées

9. Niveleur de quai suivant la revendication 2, caractérisé en ce que les attaches (14) sont montées en ayant un petit jeu entre la traverse (15) et la tôle de couverture du tablier (1).

10. Niveleur de quai suivant la revendication 1, 2, 3 ou 9, caractérisé en ce que les attaches (14) comportent sur leur face supérieure une cavité (18) dans laquelle sont placés la tête du boulon (21) fileté et la rondelle (19).

11. Niveleur de quai suivant la revendication 1, caractérisé en ce que l'oeillet des attaches (14) fait salle dans une fenêtre (8) d'un encadrement (9) du niveleur de quai entourant le tablier (1) et y est soudée.

12. Niveleur de quai suivant la revendication 1, caractérisé en ce qu'il est associé à chaque attache (14) un axe (6) dont les extrémités sont placées dans les douilles (7).
